# EUROPÄISCHE PATENTSCHRIFT

(11) **EP 0 891 804 B1**
(45) Veröffentlichungstag und Bekanntmachung des Hinweises auf die Patenterteilung: **27.08.2003**
(21) Anmeldenummer: 98111839.1
(22) Anmeldetag: 26.06.1998
(51) Int. Cl.: B01D 53/50, C01C 1/247

(54) **Anlage zur Entfernung von SO2 aus Rauchgas und Erzeugung von Ammoniumsulfatlösung**
Device for removing SO2 from exhaust gases and preparation of an ammonium sulfate solution
Installation pour l'élimination de SO2 de gaz de fumée et préparation d'une solution de sulfate d'ammonium

(30) Priorität: 19.07.1997 DE 19731062
(43) Veröffentlichungstag der Anmeldung: 20.01.1999
(73) Patentinhaber: Lurgi Energie und Entsorgung GmbH, 40880 Ratingen (DE)
(72) Erfinder: Risse, Theo Dipl. Ing., 59368 Werne (DE); Ferrao, Lourenço Dipl. Ing., 46535 Dinslaken (DE)
(74) Vertreter: Albrecht, Rainer Harald, Dr.-Ing.

(56) Entgegenhaltungen:
- EP-A- 0 620 187
- DE-A- 3 721 684
- DE-A- 3 733 319

## Beschreibung

Die Erfindung betrifft eine Anlage zur Entfernung von SO₂ aus Rauchgas und Erzeugung von Ammoniumsulfatlösung, die zu Wertstoffen weiterverarbeitbar ist.

Eine aus DE-C 37 33 319 bekannte Anlage weist einen Vorwäscher zur Abtrennung von Halogenwasserstoffen sowie einen der Vorwäsche nachgeschalteten Gaswäscher mit drei Waschzonen auf. An die mittlere Waschzone des Gaswäschers ist ein Waschflüssigkeitskreislauf angeschlossen, dem als Absorbens Ammoniakwasser zugeführt wird. Aus dem Waschflüssigkeitskreislauf wird ein Teilstrom abgezogen und einer Oxidationsvorrichtung zugeführt. Hier erfolgt die Oxidation von in der Absorptionsflüssigkeit enthaltenem Ammoniumsulfit und Ammoniumhydrogensulfit zu Ammoniumsulfat. Im Vorwäscher wird Wasser eingesetzt, welches in einem dem Vorwäscher zugeordneten Waschwasserkreislauf vom Flüssigkeitssumpf des Vorwäschers zu einer Sprüheinrichtung des Vorwäschers zurückgeführt wird. Aus dem Flüssigkeitssumpf des Vorwäschers wird ein Teilstrom abgezogen und dem Absorptionsflüssigkeitskreislauf der mittleren Waschzone des nachgeschalteten Gaswäschers zugeführt. Die im Vorwäscher abgeschiedenen Schadstoffe gelangen in den Absorptionsflüssigkeitskreislauf des Gaswäschers und werden mit der Ammoniumsulfatlösung aus der Oxidationsvorrichtung ausgeschleust. Bei der Weiterverarbeitung zu Ammoniumsulfat durch Eindampfen und Granulieren fällt ein verunreinigtes Endprodukt an, das noch als Düngemittel verwendet werden kann.

Aus EP-A 620 187 ist eine Anlage bekannt, die ebenfalls einen Vorwäscher zur Abtrennung von Halogenwasserstoffen und einen nachgeschalteten Gaswäscher zur Entfernung von SO₂ aufweist. Der Wäschersumpf des Gaswäschers ist mit einer Sumpfbelüftung ausgerüstet. Die Gaswäsche erfolgt mit Ammoniumsulfat, die aus dem Sumpf des Gaswäschers abgezogen und Sprühdüsen des Gaswäschers zugeführt wird. Ein Ammoniumsulfatteilstrom wird in den Flüssigkeitssumpf des Vorwäschers geleitet, der eine Sprüheinrichtung sowie eine Einrichtung für die Rückführung der Flüssigkeit aus dem Flüssigkeitssumpf zu der Sprüheinrichtung aufweist. Durch Kreislaufführung erfolgt eine Eindickung der Ammoniumsulfatlösung. Ein Teilstrom der eingedickten Ammoniumsulfatlösung wird aus dem Flüssigkeitssumpf des Vorwäschers abgeschlämmt, durch Hydrozyklonen weiter eingedickt und zu Ammoniumsulfat getrocknet. Das Endprodukt ist ebenfalls mit den im Vorwäscher abgeschiedenen Schadstoffen verunreinigt.

Die bekannten Anlagen mit separatem Vorwäscher zur Abscheidung von Halogenwasserstoffen und separatem Gaswäscher zur Entfernung von SO₂ aus Rauchgas sind aufwendig. Nachteilig ist ferner, daß mit den bekannten Anlagen nur ein verunreinigtes Ammoniumsulfat-Endprodukt erzeugt werden kann, das allenfalls noch als Düngemittel verwertet werden kann.

Der Erfindung liegt die Aufgabe zugrunde, eine Anlage anzugeben, mit der zwei Ammoniumsulfatlösungen unterschiedlicher Qualität hergestellt werden können. Die Anlage soll einen möglichst einfachen Aufbau besitzen.

Gegenstand der Erfindung und Lösung dieser Aufgabe ist eine Anlage zur Entfernung von SO₂ aus Rauchgas und Erzeugung von Ammoniumsulfatlösung, die zu Wertstoffen weiterverarbeitbar ist, mit
einem Wäscher, der mindestens eine von unten nach oben von dem Rauchgas durchströmte Waschzone, eine oberhalb der Waschzone angeordnete Verteilereinrichtung für die Zuführung von Absorptionsflüssigkeit und einen unterhalb der Waschzone angeordneten, gasdurchlässigen Sammelboden für Flüssigkeit aufweist,
einer Einrichtung für die Zuführung von Ammoniakwasser zur Waschzone,
einer Oxidationsvorrichtung für die Oxidation von in der Absorptionsflüssigkeit enthaltenem Ammoniumsulfit und Ammoniumhydrogensulfit in Ammoniumsulfat,
einem Absorptionsflüssigkeitskreislauf, der den Sammelboden mit der Oxidationsvorrichtung sowie die Oxidationsvorrichtung mit der oberhalb der Waschzone angeordneten Verteilereinrichtung verbindet,
einem Rauchgaskanal für die Zuführung des Rauchgases zum Wäscher, der oberhalb des Wäschersumpfes in den Wäscher einmündet,
einer im Rauchgaskanal angeordneten Sprüheinrichtung für die Zuführung einer den Rauchgasstrom kühlenden und mit Wasserdampf sättigenden Quenchflüssigkeit, die als Tropfen im Rauchgasstrom mitgeführt wird und in den Wäschersumpf gelangt,
einer Einrichtung für die Rückführung der Flüssigkeit aus dem Wäschersumpf zu der im Rauchgaskanal angeordneten Sprüheinrichtung,
wobei dem Wäschersumpf über eine Speiseleitung Ammoniumsulfat aus der Oxidationsvorrichtung zuführbar ist und an den Wäschersumpf eine Abschlämmleitung angeschlossen ist, aus der eine durch die Kreislaufführung aufkonzentrierte, für eine Düngemittelproduktion geeignete Ammoniumsulfatlösung abziehbar ist, und wobei an die Oxidationsvorrichtung eine Abzugsleitung für den Abzug einer im wesentlichen verunreinigungsfreien, für die Produktion von reinem Ammoniumsulfat geeignete Ammoniumsulfatlösung angeschlossen ist.

Die erfindungsgemäße Lehre nutzt den Wäschersumpf als Sammelbehälter für die zur Vorwäsche sowie als Quenchflüssigkeit eingesetzte Ammoniumsulfatlösung. Der Wäschersumpf ist eingebunden in einen Flüssigkeitskreislauf, wobei durch den Stoffübergang in den heißen Rauchgasstrom beim Quenchen eine Eindickung der Ammoniumsulfatlösung erfolgt. Die zur SO₂-Abscheidung eingesetzte Absorptionsflüssigkeit wird separat auf einem unterhalb der Waschzone angeordneten Sammelboden aufgefangen und der Oxidationsvorrichtung zugeführt. In der erfindungsgemäßen Anlage ist eine konzentrierte, aber verunreinigte Ammoniumsulfatlösung aus dem Sumpf des Wäschers abziehbar und fällt in der Oxidationsvorrichtung außerdem eine im wesentlichen verunreinigungsfreie Ammoniumsulfatlösung an, deren Ammoniumsulfatkonzentration geringer ist. Die Herstellung der beiden unterschiedlichen Ammoniumsulfatlösungen ist in bezug auf das Mengenverhältnis variabel, so daß eine spezifikationsgerechte, an den Bedürfnissen der Praxis orientierte Ammoniumsulfatproduktion möglich ist.

Gemäß einer bevorzugten Ausführung der Erfindung ist an die Sprüheinrichtung des Rauchgaskanals eine Zusatzeinrichtung für die Zuführung von NaOH und/oder KOH-Lösungen angeschlossen. KOH und NaOH dienen dazu, Halogene zu binden und zu neutralisieren. Bevorzugt ist die Verwendung von KOH, welches auch als Kaliumanteil im Ammoniumsulfatdünger akzeptabel ist.

Die Waschzone weist vorzugsweise eine mit der Absorptionsflüssigkeit berieselte Füllkörperschüttung auf. In den Wäscher kann ferner ein Naßelektrofilter zur Abscheidung von Aerosolen eingebaut sein, welches vor dem kopfseitigen Reingasaustritt des Wäschers angeordnet ist.

In weiterer Ausgestaltung lehrt die Erfindung, daß der Waschzone ein zweiter Absorptionsflüssigkeitskreislauf zugeordnet ist, durch den ammoniumsulfithaltige Absorptionsflüssigkeit unter Umgehung der Oxidationsvorrichtung direkt der oberhalb der Waschzone angeordneten Verteiler-einrichtung zuführbar ist. Eine mit zwei Absorptionsflüssigkeitskreisläufen ausgebildete Anlage ermöglicht ein Verfahren, bei dem die an der Oberseite der Waschzone aufgegebene Absorptionsflüssigkeit aus einer Mischung aus Ammoniakwasser, ammoniumsulfithaltiger Waschflüssigkeit, die unterhalb der Waschzone aus dem Wäscher abgezogen und ohne Zwischenbehandlung zurückgeführt wird, und Ammoniumsulfatlösung, die aus der Oxidationsvorrichtung zurückgeführt wird, besteht, wobei ein Mischungsverhältnis zwischen Ammoniumsulfit und Ammoniumsulfat von 15:1 bis 3:1 eingestellt wird. Vorzugsweise liegt das Ammoniumsulfit/Ammoniumsulfat-Mischungsverhältnis im Bereich zwischen 10:1 und 5:1. Die Absorptionsflüssigkeit zeichnet sich durch ein großes SO₂-Absorptionsvermögen aus und zeigt keine Tendenz zur Aerosolbildung.

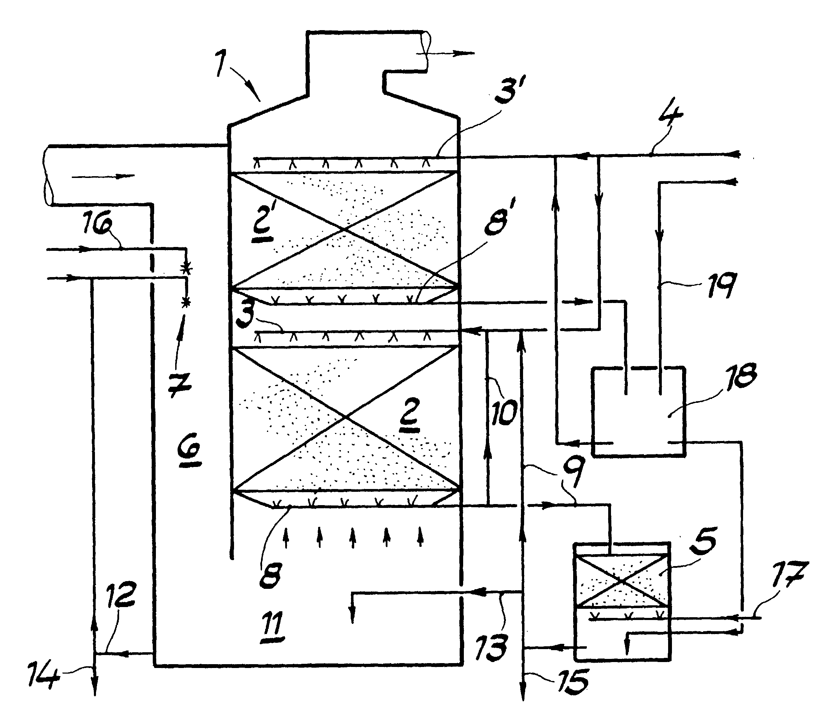

Im folgenden wird die Erfindung anhand einer lediglich ein Ausführungsbeispiel darstellenden Zeichnung erläutert. Die einzige Figur zeigt in schematischer Darstellung eine Anlage zur Entfernung von SO₂ aus Rauchgas und zur Erzeugung von Ammoniumsulfatlösung, die zu Wertstoffen weiterverarbeitbar ist.

Zum grundsätzlichen Aufbau der Anlage gehören ein Wäscher 1 mit mindestens einer von unten nach oben von dem Rauchgas durchströmten Waschzone 2 sowie einer oberhalb der Waschzone 2 angeordneten Verteilereinrichtung 3 für die Zuführung von Absorptionsflüssigkeit, eine Einrichtung 4 für die Zuführung von Ammoniakwasser zur Waschzone 2, eine Oxidationsvorrichtung 5 für die Oxidation von in der Absorptionsflüssigkeit enthaltenem Ammoniumsulfit und Ammoniumhydrogensulfit in Ammoniumsulfat, ein Rauchgaskanal 6 für die Zuführung des Rauchgases zum Wäscher 1, eine im Rauchgaskanal 6 angeordneten Sprüheinrichtung 7 für die Zuführung einer den Rauchgasstrom kühlenden und mit Wasserdampf sättigenden Quenchflüssigkeit.

Unterhalb der Waschzone 2 ist ein gasdurchlässiger Sammelboden 8 für Flüssigkeit angeordnet. Der Waschzone 2 ist ein Absorptionsflüssigkeitskreislauf 9 zugeordnet, der den Sammelboden 8 mit der Oxidationsvorrichtung 5 sowie die Oxidationsvorrichtung 5 mit der oberhalb der Waschzone 2 angeordneten Verteilereinrichtung 3 verbindet. Der Waschzone 2 ist ferner ein zweiter Absorptionsflüssigkeitskreislauf 10 zugeordnet, durch den ammoniumsulfithaltige Absorptionsflüssigkeit unter Umgehung der Oxidationsvorrichtung direkt der oberhalb der Waschzone 2 angeordneten Verteilereinrichtung 3 zuführbar ist.

Der Rauchgaskanal 6 für die Zuführung des Rauchgases zum Wäscher 1 mündet oberhalb des Wäschersumpfes 11 in den Wäscher 1 ein. Die von der im Rauchgaskanal 6 angeordneten Sprüheinrichtung 7 zugeführte Quenchflüssigkeit wird als Tropfen im Rauchgasstrom mitgeführt und gelangt in den Wäschersumpf 11. Über eine Rückführeinrichtung 12 wird die Flüssigkeit aus dem Wäschersumpf 11 zu der im Rauchgaskanal 6 angeordneten Sprüheinrichtung 7 zurückgeführt.

Über eine Speiseleitung 13 ist dem Wäschersumpf 11 Ammoniumsulfat aus der Oxidationsvorrichtung 5 zuführbar. An den Wäschersumpf 11 ist eine Abschlämmleitung 14 angeschlossen, aus der eine durch die Kreislaufführung aufkonzentrierte, für eine Düngemittelproduktion geeignete Ammoniumsulfatlösung abziehbar ist. Eine im wesentlichen verunreinigungsfreie Ammoniumsulfatlösung ist der Oxidationsvorrichtung 5 entnehmbar. Dazu ist eine an die Oxidationsvorrichtung 5 angeschlossene Abzugsleitung 15 vorgesehen, durch die eine Ammoniumsulfatlösung abgezogen wird, die für die Produktion von reinem Ammoniumsulfat geeignet ist.

Die in der Figur dargestellte Anlage dient zur Entfernung von SO₂ aus Rauchgas, welches beispielsweise aus einer Müllverbrennungsanlage, einer Clausanlage, einem Kraftwerk, einer Klärschlammverbrennungsanlage, oder einer Sulfitrösterei stammen kann. Das Rauchgas wird auf einen Wert vorentstaubt, der sich aus der zulässigen Spezifikation für Düngemittel ergibt, wenn man die im Rauchgas enthaltenen schwermetallhaltigen Verunreinigungen ins Verhältnis zur SO₂-Konzentration setzt. Die Vorentstaubung findet in einem Temperaturbereich zwischen 160 und 350° C statt, so daß keine Kondensation von Schwefelsäuretröpfchen stattfinden kann. Die Eintrittstemperatur in den Rauchgaskanal 6, in dem eine Quenchkühlung stattfindet, sollte 110 bis 180° C betragen.

Das der Anlage zugeführte Rauchgas wird im Rauchgaskanal 6 mit einer NaOH- oder KOH-Lösung, die über eine Leitung 16 zugeführt wird, berieselt, um vorhandene Halogenwasserstoffe abzuscheiden. Ferner wird dem Rauchgas über die Sprüheinrichtung 7 Ammoniumsulfatlösung zugeführt, wobei das Rauchgas gekühlt und mit Wasserdampf gesättigt wird. Die Flüssigkeitstemperatur wird in einem Bereich zwischen 45 und 60° C gehalten, wobei die Sättigungstemperatur des Gases die Temperatur der Quenchflüssigkeit bestimmt.

Das gekühlte, mit Wasserdampf gesättigte und halogenwasserstofffreie Rauchgas strömt anschließend in die Waschzone 2 des Wäschers 1. In der Waschzone 2 wird das im wesentlichen mit SO₂ beladene Rauchgas mit einer Absorptionsflüssigkeit in Kontakt gebracht, die aus einem Gemisch aus Ammoniakwasser, wässriger Ammoniumsulfatlösung und frisch gebildeter Ammoniumsulfitlösung besteht. Ein Teilstrom der auf dem gasdurchlässigen Sammelboden 8 unterhalb der Waschzone 2 abgezogenen Absorptionsflüssigkeit wird im Absorptionsflüsssigkeitskreislauf 9 der Oxidationsvorrichtung zugeführt. Dort erfolgt durch Zugabe eines sauerstoffhaltigen Gases eine Oxidation der in der Flüssigkeit vorhandenen Ammoniumsulfite und Ammoniumhydrogensulfite zu Ammoniumsulfat. Der andere Teil der Absorptionsflüssigkeit wird über die Leitung 10 im Kreis geführt, mit Ammoniakwasser aus der Leitung 4 sowie Ammoniumsulfatlösung aus der Oxidationsvorrichtung 5 vermischt und der als Berieselungseinrichtung ausgebildeten Verteilereinrichtung 3 oberhalb der Waschzone 2 zugeführt.

Die Waschzone 2 enthält eine Füllkörperschüttung, welche die Kontaktoberfläche zwischen Rauchgas und Absorptionsflüssigkeit vergrößert und die SO₂-Absorption verbessert. Durch den Einsatz von Füllkörpern ist es möglich, die Höhe der Waschzone 2 und damit die Bauhöhe des Wäschers 1 insgesamt zu verringern. In der Füllkörperschüttung sind handelsübliche Füllkörper einsetzbar, die aus einem gegenüber sauren Gasen inerten Material besteht.

Um eine effektive Absorption von SO₂ zu erreichen, wird der pH-Wert der Absorptionsflüssigkeit aufgabeseitig zwischen pH 5 und pH 6,5 eingestellt. Die pH-Einstellung erfolgt über die Zuführung von Ammoniakwasser.

An die Oxidationsvorrichtung 5 ist eine Luftleitung 17 mit Gebläse angeschlossen. Die über die Leitung 17 zugeführte Luft wird intensiv mit der NH₄HSO₃ und (NH₄)₂SO₃ enthaltenen Flüssigkeit in Kontakt gebracht. Die anfallende Ammoniumsulfatlösung wird im Sumpf der Oxidationsvorrichtung 5 gesammelt. Die Ammoniumsulfatkonzentration wird z. B. durch Dichtemessung bestimmt. Mit einer Ammoniumsulfatkonzentration von 25 bis 30 Gew.-% wird die Ammoniumsulfatlösung aus dem Sumpf der Oxidationsvorrichtung 5 abgezogen. Der über die Leitung 15 abgezogene Teilstrom ist einer nicht dargestellten Ammoniumsulfatgewinnungsanlage zuführbar, in der durch Entfernen von Wasser reines Ammoniumsulfat hergestellt wird. Ein über die Leitung 13 abgezogener Teilstrom wird dem Wäschersumpf 11 zugeführt und in dem an den Wäschersumpf 11 angeschlossenen Flüssigkeitskreislauf, zu den die Rückführleitung -12 gehört, als Quenchflüssigkeit zum Kühlen des Rauchgases verwendet, wobei eine Aufkonzentrierung der Ammoniumsulfatlösung auf Ammoniumsulfatkonzentration bis zu 42 Gew.-% erfolgt.

Die Flüssigkeitsmenge im Sumpf der Oxidationsvorrichtung 5 ist über eine entsprechende Zuleitung durch Zufuhr von Wasser oder Waschflüssigkeit aus einem Pufferbehälter 18 konstant einstellbar.

In dem in der Figur dargestellten Ausführungsbeispiel enthält der Wäscher 1 eine zweite Waschzone 2' ebenfalls mit einer Füllkörperschüttung. Eine Waschlösung wird mit einem pH-Wert zwischen pH 4 und pH 6 über eine Verteilereinrichtung 3' auf die Schüttung der zweiten Waschzone 2' aufgegeben und mit dem gereinigten Gas in Kontakt gebracht.

Die beladene Waschflüssigkeit der zweiten Waschzone 2' wird auf einem unterhalb der zweiten Waschzone 2' angeordneten Flüssigkeitssammelboden 8' abgezogen und in den Pufferbehälter 18 geleitet. Der pH-Wert der Waschflüssigkeit wird durch Zufuhr von Ammoniakwasser über die Leitung 4 eingestellt. Der Flüssigkeitsstand im Sumpf des Pufferbehälters 18 wird über die Zufuhr von Wasser über die Leitung 19 geregelt.

Das gereinigte Rauchgas wird anschließend zum Kamin geführt und an die Umgebung abgegeben.

## Patentansprüche

1. Anlage zur Entfernung von SO₂ aus Rauchgas und Erzeugung von Ammoniumsulfatlösung, die zu Wertstoffen weiterverarbeitbar ist, mit
einem Wäscher (1), der mindestens eine von unten nach oben von dem Rauchgas durchströmte Waschzone (2), eine oberhalb der Waschzone (2) angeordnete Verteilereinrichtung (3) für die Zuführung von Absorptionsflüssigkeit und einen unterhalb der Waschzone (2) angeordneten, gasdurchlässigen Sammelboden (8) für Flüssigkeit aufweist,
einer Einrichtung (4) für die Zuführung von Ammoniakwasser zur Waschzone (2),
einer Oxidationsvorrichtung (5) für die Oxidation von in der Absorptionsflüssigkeit enthaltenem Ammoniumsulfit und Ammoniumhydrogensulfit in Ammoniumsulfat,
einem Absorptionsflüssigkeitskreislauf (9), der den Sammelboden (8) mit der Oxidationsvorrichtung (5) sowie die Oxidationsvorrichtung (5) mit der oberhalb der Waschzone (2) angeordneten Verteilereinrichtung (3) verbindet,
einem Rauchgaskanal (6) für die Zuführung des Rauchgases zum Wäscher (1), der oberhalb des Wäschersumpfes (11) in den Wäscher (1) einmündet,
einer im Rauchgaskanal (6) angeordneten Sprüheinrichtung (7) für die Zuführung einer den Rauchgasstrom kühlenden und mit Wasserdampf sättigenden Quenchflüssigkeit, die als Tropfen im Rauchgasstrom mitgeführt wird und in den Wäschersumpf (11) gelangt,
einer Einrichtung (12) für die Rückführung der Flüssigkeit aus dem Wäschersumpf (11) zu der im Rauchgaskanal (6) angeordneten Sprüheinrichtung (7),
wobei dem Wäschersumpf (11) über eine Speiseleitung (13) Ammoniumsulfat aus der Oxidationsvorrichtung (5) zuführbar ist und an den Wäschersumpf (11) eine Abschlämmleitung (14) angeschlossen ist, aus der eine durch die Kreislaufführung aufkonzentrierte, für eine Düngemittelproduktion geeignete Ammoniumsulfatlösung abziehbar ist, und wobei an die Oxidationsvorrichtung (5) eine Abzugsleitung (15) für den Abzug einer im wesentlichen verunreinigungsfreien, für die Produktion von reinem Ammoniumsulfat geeignete Ammoniumsulfatlösung angeschlossen ist.

2. Anlage nach Anspruch 1, wobei an die Sprüheinrichtung (7) eine Zusatzeinrichtung für die Zuführung von NaOH und/oder KOH-Lösungen angeschlossen ist.

3. Anlage nach Anspruch 1 oder 2, wobei die Waschzone (2) eine mit der Absorptionsflüssigkeit berieselte Füllkörperschüttung aufweist.

4. Anlage nach einem der Ansprüche 1 bis 3, wobei der Waschzone (2) ein zweiter Absorptionsflüssigkeitskreislauf (10) zugeordnet ist, durch den ammoniumsulfithaltige Absorptionsflüssigkeit unter Umgehung der Oxidationsvorrichtung (5) direkt der oberhalb der Waschzone (2) angeordneten Verteilereinrichtung (3) zuführbar ist.

5. Anlage nach einem der Ansprüche 1 bis 4, wobei in den Wäscher (1) ein Naßelektrofilter zur Abscheidung von Aerosolen eingebaut ist, welches vor dem kopfseitigen Reingasaustritt des Wäschers (1) angeordnet ist.

## Claims

1. An installation for removing SO₂ from flue gas and for producing ammonium sulphate solution which can be further processed to produce valuable substances, comprising
a scrubber (1) which comprises at least one scrubbing zone (2) through which the flue gas flows from bottom to top, a distributor device (3), which is disposed above the scrubbing zone (2), for the supply of absorption liquid, and a gas-permeable collecting tray (8) for liquid, which tray is disposed underneath the scrubbing zone (2),
a device (4) for supplying aqueous ammonia to the scrubbing zone (2),
an oxidation apparatus (5) for the oxidation of ammonium sulphite and ammonium hydrogen sulphite contained in the absorption liquid to form ammonium sulphate,
an absorption liquid circuit (9), which connects the collecting tray (8) to the oxidation apparatus (5) and which also connects the oxidation apparatus (5) to the distributor device (3) which is disposed above the scrubbing zone (2),
a flue gas duct (6) for supplying the flue gas to the scrubber (1), which duct leads into the scrubber (1) above the scrubber sump (11),
a spraying device (7), which is disposed in the flue gas duct (6), for supplying a quenching liquid, which cools the flue gas stream and which saturates it with water vapour, and which is entrained as droplets in the flue gas stream and enters the scrubber sump (11),
a device (12) for recycling the liquid from the scrubber sump (11) to the spraying device (7) disposed in the flue gas duct (6),
wherein ammonium sulphate from the oxidation apparatus (5) can be fed via a supply line (13) to the scrubber sump (11), and a decantation line (14), from which ammonium sulphate solution can be taken off which is concentrated by the circulating feed and which is suitable for fertiliser production, is connected to the scrubber sump (11), and wherein a take-off line (15), for the take-off of an ammonium sulphate solution which is substantially free from contaminants and which is suitable for the production of pure ammonium sulphate, is connected to the oxidation apparatus (5).

2. An installation according to claim 1, wherein a feeder device for the supply of NaOH and/or KOH solutions is connected to the spraying device (7).

3. An installation according to claim 1 or 2, wherein the scrubbing zone (2) comprises a packed bed which is wetted by the absorption liquid.

4. An installation according to any one of claims 1 to 3, wherein a second absorption liquid circuit (10), through which absorption liquid which contains ammonium sulphite can be fed directly to the distributor device (3) disposed above the scrubbing zone (2) whilst bypassing the oxidation apparatus, is associated with the scrubbing zone (2).

5. An installation according to any one of claims 1 to 4, wherein a wet electrostatic precipitator for the separation of aerosols is installed in the scrubber (1) and is disposed upstream of the clean gas outlet at the top of the scrubber (1).

## Revendications

1. Installation permettant d'éliminer du SO₂ provenant de gaz de fumée et de produire une solution de sulfate d'ammonium pouvant être transformée en matière recyclable, comprenant :
- un laveur (1) présentant au moins une zone de lavage (2) traversée de bas en haut par le gaz de fumée, un dispositif de distribution (3) agencé au-dessus de la zone de lavage (2) pour amener un liquide d'absorption et un fond collecteur (8) pour le liquide, perméable au gaz et agencé au-dessous de la zone de lavage (2),
- un dispositif (4) pour amener de l'eau ammoniacale à la zone de lavage (2),
- un dispositif d'oxydation (5) pour l'oxydation du sulfite d'ammonium et du bisulfite d'ammonium contenus dans le liquide d'absorption pour former du sulfate d'ammonium,
- un circuit de liquide d'absorption (9) qui relie le fond collecteur (8) au dispositif d'oxydation (5) ainsi que le dispositif d'oxydation (5) au dispositif de distribution (3) agencé au-dessus de la zone de lavage (2),
- une arrivée de gaz de fumée (6) pour amener le gaz de fumée au laveur (1) et qui débouche sur le laveur (1) au-dessus du bassin de laveur (11),
- un dispositif de pulvérisation (7) agencé dans l'arrivée de gaz de fumée (6) pour amener un liquide d'injection refroidissant le courant de gaz de fumée et le saturant en vapeur d'eau, le liquide étant entraîné dans le courant de gaz de fumée et atteignant le bassin de laveur (11),
- un dispositif (12) permettant de ramener le liquide du bassin de laveur (11) au dispositif de pulvérisation (7) agencé dans l'arrivée de gaz de fumée (6),
dans laquelle du sulfate d'ammonium provenant du dispositif d'oxydation (5) peut être amené au bassin de lavage (11) par l'intermédiaire d'une conduite d'alimentation (13), et au bassin de laveur (11) est connectée une conduite de purge (14) dont on peut extraire une solution de sulfate d'ammonium, concentrée par le système circulaire et adaptée pour une production d'engrais, et dans laquelle une conduite d'extraction (15) est connectée au dispositif d'oxydation (5) pour extraire une solution de sulfate d'ammonium substantiellement exempte d'impuretés et adaptée pour la production de sulfate d'ammonium pur.

2. Installation selon la revendication 1, dans laquelle un dispositif supplémentaire permettant d'amener des solutions de NaOH et/ou KOH est connecté au dispositif de pulvérisation (7).

3. Installation selon la revendication 1 ou 2, dans laquelle la zone de lavage (2) présente garnissage de colonne arrosé d'un liquide d'absorption.

4. Installation selon l'une quelconque des revendications 1 à 3, dans laquelle un deuxième circuit de liquide d'absorption (10) est affecté à la zone de lavage (2), circuit par lequel un liquide d'absorption contenant du sulfite d'ammonium peut être amené directement au dispositif de distribution (3) agencé au-dessus de la zone de lavage (2), en contournant le dispositif d'oxydation (5).

5. Installation selon l'une quelconque des revendications 1 à 4, dans laquelle un électrofiltre humide est agencé dans le laveur (1) pour la précipitation des aérosols, le filtre étant agencé avant la sortie de gaz purifié côté avant du laveur (1).
